# EUROPEAN PATENT SPECIFICATION

(11) **EP 1 612 547 B1**
(45) Date of publication and mention of the grant of the patent: **24.06.2009**
(21) Application number: 04425488.6
(22) Date of filing: 30.06.2004
(51) Int. Cl.: G01N 27/12, C09D 11/00

(54) **Sensor with ink-jet printed active film and method for making the sensor**
Sensor mit tintenstrahlgedrucktem aktiven Film und Verfahren zur Herstellung des Sensors
Capteur avec film actif produit par jet d'encre et procédé de fabrication de ce capteur

(43) Date of publication of application: 04.01.2006
(73) Proprietor: STMicroelectronics S.r.l., 20041 Agrate Brianza (Milano) (IT)
(72) Inventor: Basco, Andrea, 80122 Napoli (IT); Volpe, Maria Viviana, 80055 Santa Maria Capua Vetere Caserta (IT); Casuscelli, Valeria, 80128 Napoli (IT); Coffa, Salvatore, 95030 Tremestieri Catania (IT)
(74) Representative: Ferrari, Barbara

(56) References cited:
- WO-A-03/018645
- US-B1- 6 221 673
- US-B1- 6 537 498
- FULLER S B ET AL: "INK-JET PRINTED NANPARTICLES MICROELECTROMECHANICAL SYSTEMS" JOURNAL OF MICROELECTROMECHANICAL SYSTEMS, IEEE INC. NEW YORK, US, vol. 11, no. 1, February 2002 (2002-02), pages 54-60, XP001124516 ISSN: 1057-7157
- JARVIS N L ET AL: "CB nanosensors" 2003 NANOTECHNOLOGY CONFERENCE AND TRADE SHOW. NANOTECH 2003. NANOTECH 2003 JOINT MEETING. 6TH INTERNATIONAL CONFERENCE ON MODELING AND SIMULATION OF MICROSYSTEMS, MSM 2003. 3RD INTERNATIONAL CONFERENCE ON COMPUTATIONAL NANOSCIENCE AND TECHNOLOGY, IC, vol. 3, February 2003 (2003-02), pages 337-338 vol.3, XP002304755 ISBN: 0-9728422-0-9

## Description

### Field of application

The present invention relates, in its more general aspect, to a method for monitoring the presence of chemical substances, also called analytes, in a determined environment.

In particular, the present invention relates to a method for realising a sensor device, of the type comprising, as detection element, an active film of metallic nanoparticles sensitive to the presence of the above chemical substances.

The present invention also relates to a sensor device obtained with the above method.

### Prior art

In the field the need of realising sensor devices able to detect the presence of one or more chemical substances in a determined environment is known, mainly of gaseous environmental pollutants, both of organic nature, such as polychlordibenz-dioxins, polychlorobiphenyls, aromatic compounds and condensate rings in general, and of inorganic nature, such as nitrogen and sulphur oxides.

The age-old problem of monitoring in an accurate way the organic compounds of the dioxin family, produced in the incinerators by the combustion of chlorinated plastic materials is particularly known.

In particular, very sensitive sensor devices are required able to detect minimal amounts, of the order of the ppb, of these substances.

So as to satisfy this need, the interest is deeper and deeper in a technique for monitoring chemical substances by employing nanostructured materials. This interest has in fact to be led to the electronic transport properties of these materials.

Nanostructured materials substantially comprise a plurality of highly organised metallic nanoparticles, also called metallic nanoclusters. The word metallic nanoparticle means a particle having dimensions generally comprised between 0,1 and 100 nm, preferably in the order of 1-10 nm, and having a metallic nucleus, for example gold, platinum or palladium, which is covered by means of a shell for being stabilised.

The cover is obtained by means of capping agents, which usually comprise polymers able to maintain the metallic nuclei separated, or by means of passivating agents, which usually comprise organic compounds with reactive groups, such as thiols and amines.

Recent developments have shown the possibility of realising sensor devices wherein the active matrix comprises a film of gold nanoparticles of the above specified type which are deposited on insulating layers, as described for example in the articles of A. W. Snow, H. Wohltjen and N. L. Jarvis: "MIME Chemical Vapor Microsensor", 2002, NRL Review, and N. L. Jarvis, A. W. Snow, H. Wohltjen and R. R. Smardzewski: "CB Nanosensors".

The developed technology is based on a morphologic alteration of the nanoparticle film which results in a variation of the conductivity thereof.

This technology is described for example in the US patent 6,221,673. This document discloses the realisation of a sensor device comprising a detection cell having an active matrix of packed nanoparticles. Each particle comprises a conductive metallic nucleus and a passivating shell.

The detection of the analytes is obtained by means of interaction of the passivating shell with the analyte so as to determine the alteration of the overall conductive property of the film of metallic nanoparticles.

In substance, the analyte, by interacting with the passivating shell, causes an increase of the distance between the metallic nanoparticles and, as a consequence, a decrease of the probability of electronic tunnelling phenomena or electronic hopping, which are responsible for the conduction.

For realising the detection cell, the known method comprises the preparation of an inert support, suitably provided with electrodes necessary for measuring the conductivity variation and generally realised by means of expensive techniques such as the traditional photolithography. In a second step a solution of the above describe nanoparticles is deposited, in suitable solvents, to form a film covering the electrodes.

The deposition of the film alternatively occurs according to two techniques.

A first technique provides to spray the solution of nebulised nanoparticles on the surface of the substrate, preferably pre-heated at a temperature higher than the boiling point of the solvents.

A second technique provides to initially apply, on the substrate surface, a solution of coupling agents, which are two-function substances, comprising a first functional group able to bind with the substrate and a second functional group able to bind with the nanoparticles. Afterwards, the substrate is dipped in the solution of nanoparticles so as to allow the bond with the solution and to obtain the desired film.

This known method, although allowing an accurate analytes detection, has however known drawbacks still unsolved.

The main drawback stays in that the known techniques for realising the electrodes (lithography) are very expensive, and in that the deposition of nanoparticle solutions has such reproducibility problems as to prevent the realisation of sensor devices on a large scale.

This drawback is even more evident if the need, in the environment monitoring field, of providing a high number of sensor devices is considered, having comparable and constant qualities in terms of sensitiveness and specificity of detection of determined polluting substances.

It is also known from US 6,537,498 to make a sensor comprising a step of jet printing an ink of nanoparticles on a supporting substrate so as to form the active film of the sensor.

The technical problem underlying the present invention is that of developing a method for the realisation of the above-specified sensor device of chemical substances, which ensures a high process reproducibility and reliability, which has a reduced cost and which offers a drastic reduction of the number of steps necessary for the realisation of the sensor device.

### Summary of the invention

Such technical problem is solved by a method for realising a sensor device as defined by claim 1.

The technical problem is also solved by a sensor device as defined by claim 22.

The detection mechanism of the active film is related to the variation of electric conductivity occurring as effect of the interaction between the metallic nanoparticles of the film and the chemical substances to be detected.

Further characteristics and advantages of the method and of the sensor according to the invention will be apparent from the following description of an embodiment thereof given by way of indicative and non limiting example with reference to the annexed drawings.

### Brief description of the drawings

In the drawings:

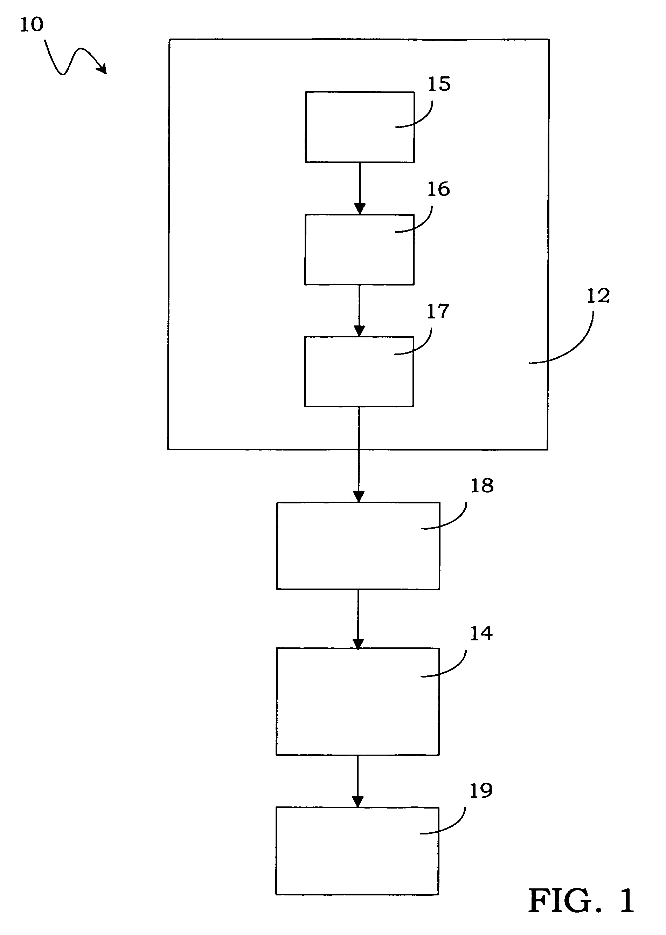

Figure 1 shows a block scheme of the method according to the present invention;
Figure 2 shows a schematic view of the sensor device according to the present invention;
Figure 3 shows a schematic view of an ink-jet printing step;
Figure 4 shows a schematic view of digitated electrodes realised according to the method of figure 1.

### Detailed description

With reference to the annexed drawings, reference number 10 globally indicates a scheme of a method according to the invention for the realisation of a sensor device suitable for monitoring chemical substances.

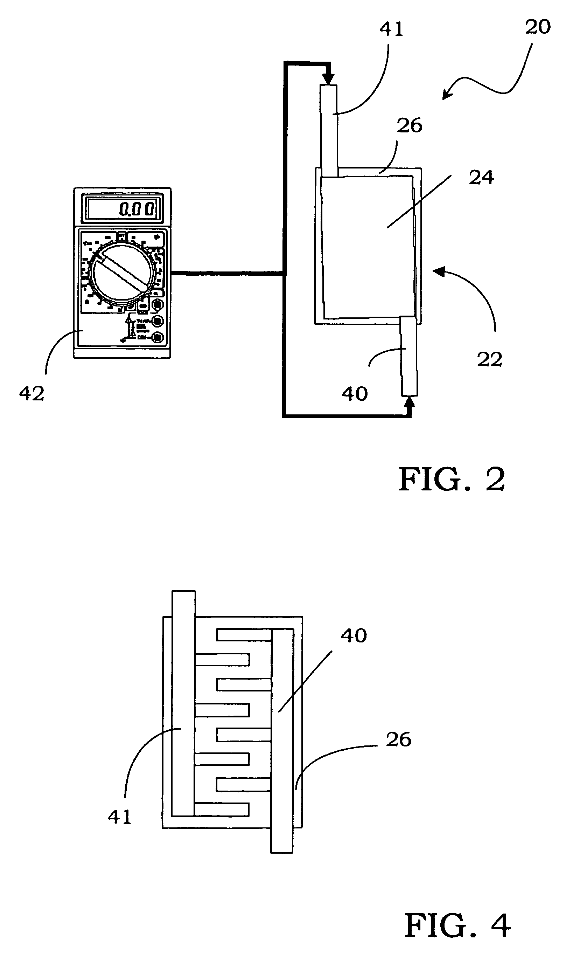

The method 10 is used in the specific case for realising a sensor device 20 of polluting gases, shown in figure 2, of the type comprising a detection cell 22 having an active film 24 of metallic nanoparticles. These latter are able to interact with the polluting gases to determine a variation of the global electric conductivity of the film 24.

In the specific case, gold is the metal of the nanoparticles, and the nanoparticles have a mean dimension of 5 nm.

The method 10 according to the invention comprises as main steps:
a preparation step 12 of an ink comprising a solution of metallic nanoparticles, and
a deposition step 14 of the ink obtained on a supporting substrate 26 by means of ink-jet printing so as to form the active film 24.

The preparation step 12 of the ink preferably comprises a synthesis step 15 of metallic nuclei, a passivation step 16 of the metallic nuclei with obtainment of nanoparticles, and a dissolution step 17 in solvent of the nanoparticles to obtain the ink.

The synthesis 15 of the metallic nuclei is carried out according to consolidated synthesis techniques.

A first synthesis technique, so called by means of polyolic process, is based on the oxidation-reduction reaction which occurs between a metallic precursor, in the specific case a gold precursor, and a polyolic reducing agent, which also plays the role of reaction solvent.

In the reaction environment a capping agent is also used, necessary for controlling the morphology and the dimensions of the metallic nanoclusters. As capping agent also a polymer can be used being soluble in the solvent and having a extension and a molecular weight suitable for the control of the metallic nucleus growth.

The most accredited reaction mechanism for the reduction of the metal (Meⁿ⁺) to elemental metal (Me), in this case from Au³⁺ to Au, is the following.

CH₂OH-CH₂OH → CH₃CHO + H₂O

2 CH₃CHO → CH₃CO-CO-CH₃ + H₂

nH₂ + 2Meⁿ⁺ → 2Me + 2nH⁺

mMe + PVP → Meₘ-PVP → Meₘ₊₁-PVP

In a preferred solution, trihydrated chloride of Au(III) is used (HauCl₄·H₂O) as metallic precursor, ethylene glycol (EG) as reducing agent or polyvinylpyrrolidone (PVP) as capping agent. An example of this synthesis is described as example in the article "P. - Y. Silvert, K. Tekaya-Elhsissen, Solid State Ionics, 1995, vol 82, pg. 53-60" and in "Volpe M.V., Longo A., Pasquini L., Casuscelli V., Carotenuto G., J. Mater. Science Letters 2003, vol. 22, pg. 1697-1699".

An example of synthesis by means of polyole process is reported at the end of the present description.

Afterwards the metallic nuclei are subjected to the above passivation step 16 with obtainment of metallic nanoparticles.

The passivation is preferably carried out by adding an organic compound having a reactive group, such as a thiol (R-SH) or an amine, to the solution of the PVP-stabilised metallic nuclei, which are previously obtained.

The type of passivating agent is not be considered as limitative for the present invention, and any known passivating agent can be used, such as aliphatic thiols, straight- or branched-chained, substituted aliphatic thiols, aromatic thiols and the like.

Also dendrimer compounds can be used as passivating agents such as those described in "Nadeja Krasteva, Isabelle Besnard, Berit Guse, Roland E. Bauer, Klaus Mullen, Akio Yasuda, and Tobias Vossmeyer, Nano Letters 2002 Vol. 2, No. 5 pg. 551-555" and "Nadeja Krasteva, Berit Guse, Isabelle Besnard, Akio Yasuda and Tobias Vossmeyer, Sensors and Actuators B 92 (2003) 137-143".

The passivation mechanism is the following:

Meₙ₋ PVP + mR-SH → Meₙ(SR)ₘ + m/2 H₂ + PVP

The obtained metallic nanoparticles have dimensions comprised between 4.5 and 10 nm and they are easily separated, by centrifugation, from the excess of thiol and of polymer, with obtainment of a stable, solid product.

Afterwards, the nanoparticles are dissolved in the above dissolution step 17 in a suitable solvent with obtainment of the ink. The choice of the solvent depends, as it will be seen more clearly hereafter, on the operative conditions of the ink-jet printing. Preferably, the used solvent is organic, such as for example toluene, chloroform, hexane and superior homologous and the like.

In the specific case, the obtained ink comprises a colloidal solution in toluene of gold nanoparticles.

According to a further embodiment, the method according to the invention comprises a synthesis step of the metallic nanoparticles by means of a so called two-phase system. This technique provides the use of a ionic metallic precursor, of a phase transfer agent and of a reducing agent. This synthesis technique is known for example from "Brust M., Walker M., Bethell D., Shiffrin D. J. And Whyman R., J. Chem. Soc., Chem. Commun., 1994, pg. 801-802".

The strategy of this synthesis mechanism is that of making the metallic nanocluster grow so that a simultaneous fixing of self-assembled passivator monolayers occurs on the growing metallic nucleus.

To this purpose, the nanoparticles are made grow in a two-phase system, and in particular two-phase oxidation-reduction reactions are carried out by using suitable oxidation-reduction reactants in each adjacent step.

The difference with respect to the previous synthesis way consists in that the passivating step is simultaneous and competitive with the nanoparticle growth. Moreover, the procedure is of the "one pot" type since the two processes occur in the same reaction means.

In particular, in the specific case, HauCl₄ is used as metallic precursor, an emulsion of H₂O, toluene and passivating agent (for example dodecanthiol) as two-phase reaction means, tetraoctilammonium bromide (N(Oct)₄Br) as phase transfer agent whereas aqueous sodium borohydride (NaBH₄) as reducing agent. The phase transfer agent allows the transfer of the metallic precursor from water to toluene.

In detail, the synthesis/passivation step is set out in the following stages.

Initially the metallic ionic precursor is dissolved in water in the presence of N(Oct) ₄Br. Afterwards, the organic phase, constituted by the passivating agent in toluene, is added to the aqueous solution.

Th addition is carried out under vigorous agitation so as to obtain an emulsion.

Afterwards, the reducing agent is added to the emulsion, which reduces the gold in the presence of the passivating agent.

The mechanism of the nucleation and growth of the metallic nanoparticles is the following:

4Meⁿ⁺ + nBH₄- + 3nH₂O → 4Me + nH₂BO₃- + 4nH⁺ + 2nH₂

The passivation mechanism is:

Meₘ + n(R-SH) → Meₘ(S-R)ₙ

An example of synthesis by means of two-phase system is reported at the end of the present description.

By working on the reaction conditions, i.e. on the reaction temperature, the metal/passivating agent ratio, addition speed of the reducing aqueous solution it is possible to obtain nanoparticles comprised within the range between 1.5 and 5.2 nm as described for example by "M. J. Hostetler, J. E. Wingate, C. -J. Zhongh, J. E. Harris, R. W. Vachet, M. R. Clark, J. D. Londono, S. J. Green, J. J. Stokes, G. D. Wignall, G. L. Glish, M. D. Porter, N. D. Evans, R. W. Murray, Langmuir 1998, 14, 17-30".

The nanoparticle ink obtained by means of one technique or the other is now used, as above mentioned, for the realisation of the active film in the above ink-jet printing step 14.

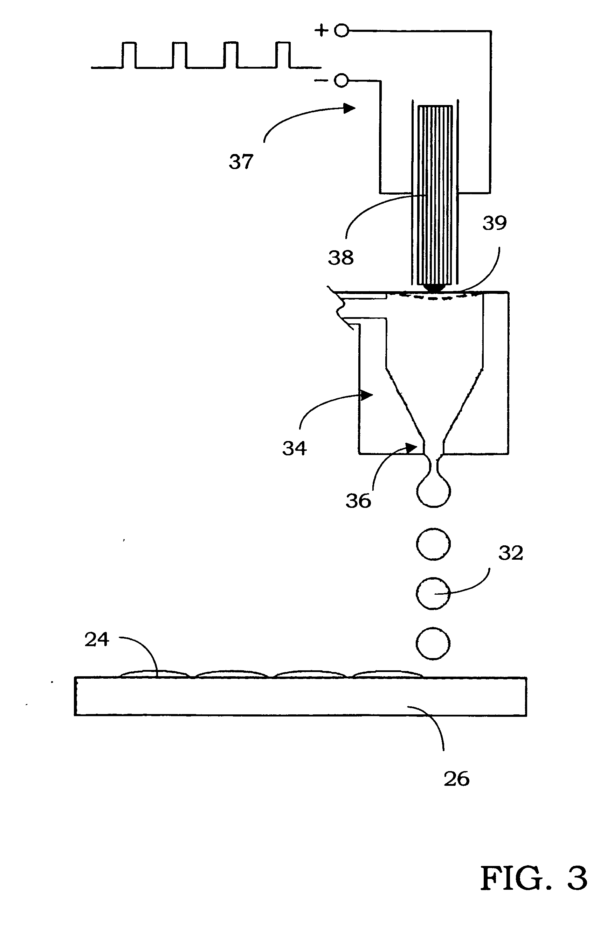

The ink-jet printing, globally indicated with number 30 in figure 3, is carried out according to the now consolidated technology for the ink-jet printing of liquid substances.

As it is known, the ink-jet printing is based on the expulsion of drops 32 of liquid substances, through a head 34 provided with nozzle 36, which represents the core of the tool.

In the specific case, for realising the active film 24 any head for ink-jet printing can be used and the ink is loaded in a suitable cartridge of the printer, not shown in the drawings.

Preferably, a printer is used which works according to the "Drop on Demand Printing" (DOD) mode, which provides the emission of single drops 22 of ink.

Within this printer typology, a system 37 is preferably used for the expulsion of the ink, comprising a piezo-electric element 38, which is connected to an co-operates with the head 34 by means of a membrane 39.

The piezo-electric element 38 is subjected to electric pulses and expands and contracts according to the signal polarity. The volume variation determines a movement of the membrane 39 so as to induce the expulsion of the drop.

According to a further embodiment, the emission of the single drops is obtained by means of a heating element.

This latter is arranged inside the head for creating a steam bubble in the liquid able to induce the expulsion of the drop.

In case this technology is employed, it is necessary to ascertain that possible substances dissolved in the ink are not damaged by the heat.

In the specific case of the realisation at issue an ink-jet printer of the commercial type can be used such as for example Epson (piezo-electric mechanism), or HP and Canon (thermal mechanism), or laboratory ink-jet printers such as those manufactured by Microfab or by Microdop.

The procedure followed for the ink-jet printing according to the method of the present invention is that for example described in a detail in the document "Sawyer B. Fuller, Eric J. Wilhelm and Joseph M. Jacobson, Ink-jet Printed Nanoparticle Microelectrical Systems, Journal of Microelectromechanical Systems, Vol 11, N. 1, Febbraio (2002)".

It goes without saying that, in the printing procedure, a technician of the field will resort to any precaution known in the filed for optimising the printing: for example the control of the liquid viscosity, of the nanoparticle concentration and of the interaction among the same in the solvent for avoiding the formation of self-assembled islands, the choice of the solvent, the choice of the printing head and the like.

For example, for ensuring a high quality of the self-assembled film it is suitable that the solvent evaporates in reasonable times, and as a consequence the organic solvents are preferred with respect to the aqueous ones. The evaporation of the solvent can be spontaneous or induced by means of suitable pre-heating of the substrate and possibly of the ink.

For controlling the liquid viscosity, it is sometimes convenient to use the above ink-jet head provided with heating element.

The material constituting the printing head is also important because it must ensure the absence of interaction with the ink. Preferably, in the case of the present invention, those materials having a higher chemical inertia are used, such as teflon, glass and the like.

Also the material of the substrate 26 must be as much inert as possible; to this purpose it is preferably realised with silica, with glass, with transparent polymer or similar materials.

In a preferred solution, before carrying out the printing step 14 for obtaining the active film 24, the same ink is used for realising metallic electrodes 40 and 41 (figure 2), which, once they are placed in contact with the active film 24 and they are connected in a known way to a measurement apparatus 42, they allow the detection of a variation of electric conductivity.

In this case, the method according to the invention comprises an ink-jet printing step 18 for the realisation of the electrodes 40, 41. To this purpose, the method according to the present invention also comprises a preliminary preparation step of a pattern for the realisation of electrodes.

For maximising the electric response of the sensor device 20 such geometries are chosen as to exalt the resistance variations during the exposition of the sensor device 20 to the chemical substances. Preferably, the method according to the present invention provides the use of interdigitated electrodes 40, 41 shown in figure 4.

According to a further embodiment, the method provides the use of two-and three-dimensional geometries by simply operating on a CAD design to be transferred to the printer.

After having introduced the ink into the cartridge, the deposition thereof follows by means of ink-jet printing according to the previously chosen pattern, and according to the previously described printing procedure.

Differently from the printing of the active film, for realising the electrodes 40, 41 the substrate 26 must be heated at a determined temperature, which, according to the material of the substrate and of the colloidal metal in solution, is comprised between 80 and 300°C.

The heating of the supporting substrate, besides facilitating the solvent evaporation, is necessary to determine a fast and controlled evaporation of the passivator which covers the single metallic nuclei.

Aim of the thermal treatment is thus the coalescence and sintering of the metallic clusters and the obtainment of a bulk metal having micromic dimensions suitable for use as electrode.

In the realisation of the electrodes, also in this case, a technician of the field will resort to any precaution necessary so that the heating temperature of the substrate ensures: breakage of the chemical bonds between the surface metallic atoms and the passivator,
separation of the passivator in the gaseous form,
fusion of the metallic clusters,
maintenance of the substrate morphology and quality.

The realisation by means of ink-jet printing and subsequent sintering of the nanoparticles also produces some electric contacts whose conductivity is about 70% of that of the massive gold, which is much higher than that necessary for the required conductivity measure.

It is to be also noted that the morphologic analysis by means of light microscopy of the electrodes obtained by means of ink-jet printing highlights a typical wave trend, which however does not invalidate the performances of the device but only pertains the morphological aspect of the system.

In a preferred solution, according to the substrate typology and to the compatibility with the solution, the method according to the invention provides a preliminary treating step of the surface of the supporting substrate and of the electrodes.

During this preliminary step, the surfaces of the supporting substrate and of the electrodes are functionalised with coupling agents of the known type, which firmly secure the active film 24 to the substrate 26 and make the sensor device 20 more resistant with respect to the aggressive action of possible disturbing agents.

After the realisation of the film 24 and of the electrodes 40, 41 the method according to the present invention also preferably comprises an exposition step 19 of the active film 24 to a controlled atmosphere enriched with one or more organic substances for characterising the electric response with respect to a known concentration of substance.

The conductivity variations are appreciated by means of resistance measures conducted during cyclic expositions of the sensor to the analyte, so as to obtain a strict correlation of a conductivity variation with the analyte amount.

From the description disclosed up to now, it is possible to appreciate the realisation of a sensor device 20, also object of the present invention, which comprises, as detection element, an active film 24 of metallic nanoparticles able to interact with the chemical substances to determine a conductivity variation of the film 24. According to the invention, the film 24 comprises a printed ink of nanoparticles.

In a preferred solution, the sensor device 20 comprises communicating electrodes 40, 41 comprising a printed and sintered ink of nanoparticles.

The main advantage of the present invention stays in that, thanks to the ink-jet printing technique, a high simplification of the sensor assembling procedure is obtained, which allows a drastic reduction both of the number of the stages necessary for the realisation of the complete device, and a simplification of the traditionally used tools.

The ink-jet printing is in fact an already consolidated technique which combines a high realisation simplicity of the active film and at the same time a remarkable printing precision and reliability of the film.

It follows that the method according to the invention allows a massive decrease of the manufacturing costs and times without invalidating the efficiency and the performances of the sensor device.

In particular, when the printing with "Drop on Demand Printing" mode is used a high printing resolution is obtained, as well as a high printing control.

In this way it is possible to ensure an absolute printing reproducibility of the active film which allows very reliable sensor devices to be obtained and having constant quality and performance.

This makes it also possible an industrialisation of the process and the obtainment, in such a way, of wide manufacturing volumes. In particular it is possible to automate all the realising steps of the procedure as well as to bring improvements in terms of speed and cost reduction.

It is in fact appreciated from the above description that the method according to the invention comprises a limited number of operative steps for the preparation of the ink and for the printing.

A further advantage of the present invention stays in that the ink-jet printing technique can be used also for the realisation of electrodes. This allows a further reduction of the costs and times, with respect to currently used technologies.

Moreover, it is to be noted that the realisation of the electrodes by means of ink-jet printing allows to use the same apparatuses used for the realisation of the active film, this further reducing the manufacturing times and costs.

Sensor devices realised according to the technology described in the invention show remarkable potentialities in several fields of application.

A first use in fact relates to the integration of one or more sensor devices in apparatuses for the detection of environmental pollutants.

Another interesting field of application provides the use of the sensor device as detector for instrumental analysis techniques such as gas chromatography: this use responds to the need of availing of a detector with high specificity and sensitiveness.

Still the use of this sensor device can be thought for the detection of explosive gases in highly risky areas, also called "Electronic Noses".

### EXAMPLE OF METALLIC NANOPARTICLE SYNTHESIS BY MEANS OF POLYOL PROCESS

About 2,8 - 8,0 g of PVP are dissolved in 20 ml of EG. The solution is left under agitation at 60°. Afterwards 5 mg of HauCl₄ are dissolved in 1 ml of EG and they are injected into the previously prepared hot solution. During the synthesis reaction the colour of the solution changes from yellow to ruby red. For completing the synthesis reaction the solution is poured into 250 ml of acetone, and everything is sonicated, for removing the excess of EG. Me-PVP is subsequently dissolved in 10 ml of dodecanthiol (CH₃(CH₂)₁₁SH), for carrying out the passivation. After about 1 h the passivation reaction is completed and the metallic nanoparticles passivated with thiol are separated by centrifugation from the excess of thiol and from the PVP.

The nanoparticles are then dispersed in a suitable solvent, such as for example toluene, for obtaining the required ink.

### EXAMPLE OF SYNTHESIS BY MEANS OF TWO-PHASE

30 ml of HauCl₄ (30mmol dm⁻³) are mixed with a solution of N(Oct)₄Br in toluene (80 ml, 50 mmol dm⁻³). The thus obtained two-phase mixture is vigorously mixed until AuCl₄- is transferred into the organic phase. At this point, 170 mg of dodecanthiol (CH₃(CH₂)₁₁SH) are added to the organic phase. Afterwards, 25 ml of an aqueous sodium borohydride solution (NaBH₄) (0,4 mol dm⁻³) are slowly added under agitation to the organic phase. After a further agitation for 3 h the organic phase is separated, evaporated up to about 10 ml and mixed with ethanol for removing the excess of thiol. The mixture is maintained for 4 h at - 18°C. A dark precipitate is obtained, comprising thiol-covered gold nanoparticles, which is dissolved more times in toluene and precipitated again in ethanol.

The nanoparticles are then dispersed in a suitable solvent, such as for example toluene, pentane, chloroform for obtaining the desired ink.

By operating on the reaction conditions, i.e. on the reaction temperature, on the metal/passivating agent ratio, addition speed of the reducing aqueous solution it is possible to obtain nanoparticles comprised within the range between 1.5 and 5.2 nm as from "M. J. Hostetler, J. E. Wingate, C.-J. Zhong, J. E. Harris, R. W. Vachet, M. R. Clark, J. D. Londono, S. J. Green, J. J. Stokes, G. D. Wignall, G. L. Glish, M. D. Porter, N. D. Evans, R. W. Murray, Langmuir 1998, 14, 17-30".

## Claims

1. Method for realising a sensor device (20) suitable for detecting the presence of chemical substances and comprising, as detection element, an active film (24) of metallic nanoparticles able to interact with the chemical substances for determining a variation of the overall electric conductivity of the film (24), the method comprising the steps of:
- preparing an ink comprising a solution of metallic nanoparticles, and
- jet printing the obtained ink on a supporting substrate (26) so as to form said active film (24), **characterised in that** it comprises the step of ink-jet printing metallic electrodes (40, 41) which are placed in contact with the active film (24) and which are connected with a testing device (42) for allowing the detection of a variation of the electric conductivity.

2. Method according to claim 1, **characterised in that** the preparation of the ink (12) comprises a synthesis step (15) of the metallic nuclei, a passivation step (16) of the synthetised metallic nuclei and a dissolution step in solvent of the nanoparticles with obtainment of the ink.

3. Method according to claim 1, **characterised in that** the ink-jet printing (30) is carried out by ejection of single drops (32) of ink, "Drop on Demand Printing", through a printing head (34) provided with nozzle (36).

4. Method according to claim 3, **characterised in that** the ejection of the single drops is carried out by means of interaction of the ink with a piezo-electric element (38) connected with said head (34).

5. Method according to claim 3, **characterised in that** the ejection of the single drops is carried out by means of interaction of the ink with a heating element connected with the head (34).

6. Method according to claim 1, **characterised in that** the electrodes (40, 41) are realised with the same ink obtained for the realisation of the active film (24).

7. Method according to claim 1, **characterised in that**, during the ink-jet printing step, the substrate (26) is heated at a determined temperature for determining the evaporation of the passivator and the sintering of metallic nuclei constituting the single nanoparticles.

8. Method according to claim 7, **characterised in that** the substrate (26) is maintained at a temperature comprised between 80 and 300 °C.

9. Method according to claim 1, **characterised in that** it comprises a preliminary preparation step of a pattern for realising electrodes by using a CAD software.

10. Method according to claim 9, **characterised in that** it comprises an interdigitating step of the electrodes (40, 41).

11. Method according to claim 2, **characterised in that** the synthesis step (15) comprises an oxidation-reduction reaction between a metallic precursor and a polyolic reducing agent.

12. Method according to claim 11, **characterised in that** the oxidation-reduction reaction is carried out in the presence of a capping agent, for controlling the morphology and the dimensions of the metallic nanoparticles.

13. Method according to claim 12, **characterised in that** the capping agent is a polyvinylpyrolidone.

14. Method according to claim 11, **characterised in that** the synthesis is carried out by means of reduction of trihydrated chloride of Au(III) (HAuCl₄·H₂O) with ethylene glycol (EG) in the presence of polyvinylpyrrolidone (PVP).

15. Method according to claim 11, **characterised in that** the metallic nuclei are passivated by means of a thiol (R-SH) or an amine.

16. Method according to claim 11, **characterised in that** for obtaining the ink the nanoparticles are dissolved in an organic solvent, such as, toluene, chloroform, hexane and superior homologous, and the like.

17. Method according to claim 1, **characterised in that** the ink comprises a colloidal solution of gold nanoparticles in toluene.

18. Method according to claim 11, **characterised in that** the synthesis of the nanoparticles comprises an oxidation-reduction reaction of a metallic precursor in a two-phase system, and that the passivation step is carried out in the same environment of the oxidation-reduction reaction.

19. Method according to claim 18, **characterised in that** the HAuCl₄ is reduced in an emulsion of H₂O, toluene and passivating agent in the presence of tetraoctilammonium bromide (N(Oct)₄Br) as phase transfer agent and of aqueous sodium borohydride (NaBH₄) as reducing agent.

20. Method according to claim 3, **characterised in that** it comprises a preliminary treatment step of the surface of the supporting substrate and of the electrodes, by means of functionalisation with coupling agents.

21. Method according to claim 1, **characterised in that** it comprises an exposure step (19) of the active film (24) to a controlled atmosphere enriched with one or more chemical substances for characterising the electric response with respect to a known substance concentration.

22. Sensor device for monitoring the presence of chemical substances, of the type comprising a supporting substrate (26) and, as detection element, an active film (24) of metallic nanoparticles, arranged on the supporting substrate (26) and able to interact with the chemical substances to determine a conductivity variation of the film (24), the active film (24) comprising a printed ink of nanoparticles, **characterised in that** the sensor comprises electrodes (40, 41) placed in communication with the active film (24) and comprising a printed and sintered ink of nanoparticles.

23. Sensor device according to claim 22, **characterised in that** the printed ink comprises gold nanoparticle having mean dimensions within a range from 1.5 to 20 nm.

24. Sensor device according to claim 22, **characterised in that** the printed ink comprises gold nanoparticles comprising a gold nucleus and a protection shell comprising a passivating agent.

25. Device according to claim 22, **characterised in that** said electrodes (40, 41) are interdigitated.

26. Sensor device according to claim 22, **characterised in that** said electrodes (40, 41) and said active film (24) comprise the same printed ink of nanoparticles.

## Patentansprüche

1. Verfahren zur Herstellung einer Sensorvorrichtung (20), die geeignet ist zum Nachweisen der Anwesenheit chemischer Substanzen, und die als Nachweiselement einen aktiven Film (24) aus metallischen Nanopartikeln, die zur Wechselwirkung mit den chemischen Substanzen in der Lage sind, um eine Veränderung der elektrischen Gesamtleitfähigkeit des Films (24) zu veranlassen, aufweist, wobei das Verfahren folgende Schritte aufweist:
- Herstellen einer Tinte, die eine Lösung von metallischen Nanopartikeln aufweist, und
- Strahldrucken der erhaltenen Tinte auf ein Trägersubstrat (26), um den aktiven Film (24) zu bilden, **dadurch gekennzeichnet, dass** es den Schritt des Tintenstrahldruckens von metallischen Elektroden (40, 41), die in Kontakt mit dem aktiven Film (24) angebracht werden und die mit einer Testvorrichtung (42) verbunden werden, um den Nachweis einer Veränderung der elektrischen Leitfähigkeit zu erlauben, aufweist.

2. Verfahren nach Anspruch 1, **dadurch gekennzeichnet, dass** die Herstellung der Tinte (12) einen Syntheseschritt (15) der metallischen Kerne, einen Passivierungsschritt (16) der synthetisierten metallischen Kerne und einen Auflösungsschritt in Lösungsmittel der Nanopartikel unter Erhaltung der Tinte aufweist.

3. Verfahren nach Anspruch 1, **dadurch gekennzeichnet, dass** das Tintenstrahldrucken (30) durchgeführt wird durch Ausspritzen einzelner Tropfen (32) von Tinte, "Drop-on-Demand-Printing", durch einen Druckkopf (34), der mit einer Düse (36) ausgestattet ist.

4. Verfahren nach Anspruch 3, **dadurch gekennzeichnet, dass** das Ausspritzen der einzelnen Tropfen mittels Wechselwirkung der Tinte mit einem piezoelektrischen Element (38), das mit dem Kopf (34) verbunden ist, durchgeführt wird.

5. Verfahren nach Anspruch 3, **dadurch gekennzeichnet, dass** das Ausspritzen der einzelnen Tropfen mittels Wechselwirkung der Tinte mit einem Heizelement, das mit dem Kopf (34) verbunden ist, durchgeführt wird.

6. Verfahren nach Anspruch 1, **dadurch gekennzeichnet, dass** die Elektroden (40, 41) mit derselben Tinte hergestellt werden, die zur Herstellung des aktiven Films (24) erhalten wurde.

7. Verfahren nach Anspruch 1, **dadurch gekennzeichnet, dass** während des Tintenstrahl-Druckschritts das Substrat (26) auf eine bestimmte Temperatur erhitzt wird, um die Verdampfung des Passivierungsmittels und das Sintern metallischer Kerne, die die einzelnen Nanopartikel ausmachen, zu bedingen.

8. Verfahren nach Anspruch 7, **dadurch gekennzeichnet, dass** das Substrat (26) bei einer Temperatur zwischen 80 und 300°C gehalten wird.

9. Verfahren nach Anspruch 1, **dadurch gekennzeichnet, dass** es einen vorausgehenden Herstellungsschritt einer Struktur zur Herstellung von Elektroden unter Verwendung einer CAD-Software aufweist.

10. Verfahren nach Anspruch 9, **dadurch gekennzeichnet, dass** es einen Schritt des ineinandergreifend Ausbildens der Elektroden (40, 41) aufweist.

11. Verfahren nach Anspruch 2, **dadurch gekennzeichnet, dass** der Syntheseschritt (15) eine Oxidations-Reduktions-Reaktion zwischen einem metallischen Vorläufer und einem polyolischen Reduktionsmittel aufweist.

12. Verfahren nach Anspruch 11, **dadurch gekennzeichnet, dass** die Oxidations-Reduktions-Reaktion in Anwesenheit eines Kappenmittels durchgeführt wird, um die Morphologie und die Abmessungen der metallischen Nanopartikel zu kontrollieren.

13. Verfahren nach Anspruch 12, **dadurch gekennzeichnet, dass** das Kappenmittel ein Polyvinylpyrrolidon ist.

14. Verfahren nach Anspruch 11, **dadurch gekennzeichnet, dass** die Synthese mittels Reduktion von trihydratisiertem Chlorid von Au(III) (HAuCl₄·H₂O) mit Ethylenglycol (EG) in Anwesenheit von Polyvinylpyrrolidon (PVP) durchgeführt wird.

15. Verfahren nach Anspruch 11, **dadurch gekennzeichnet, dass** die metallischen Kerne mittels eines Thiols (R-SH) oder eines Amins passiviert werden.

16. Verfahren nach Anspruch 11, **dadurch gekennzeichnet, dass** die Nanopartikel in einem organischen Lösungsmittel wie Toluol, Chloroform, Hexan und höheren Homologen und dergleichen, gelöst werden, um die Tinte zu erhalten.

17. Verfahren nach Anspruch 1, **dadurch geknnzeichnet, dass** die Tinte eine kolloidale Lösung von Gold-Nanopartikeln in Toluol aufweist.

18. Verfahren nach Anspruch 11, **dadurch gekennzeichnet, dass** die Synthese der Nanopartikel eine Oxidations-Reduktions-Reaktion eines metallischen Vorläufers in einem Zweiphasen-System aufweist, und dass der Passivierungsschritt in derselben Umgebung der Oxidations-Reduktions-Reaktion durchgeführt wird.

19. Verfahren nach Anspruch 18, **dadurch gekennzeichnet, dass** die HAuCl₄ in einer Emulsion von H₂O, Toluol und Passivierungsmittel in Anwesenheit von Tetraoctylammoniumbromid (N(Oct)₄Br) als Phasen-Transfermittel und wässrigem Natriumborhydrid (NaBH₄) als Reduktionsmittel reduziert wird.

20. Verfahren nach Anspruch 3, **dadurch gekennzeichnet, dass** es einen vorausgehenden Behandlungsschritt der Oberfläche des Trägersubstrats und der Elektroden mittels Funktionalisierung mit Haftverbesserungsmitteln aufweist.

21. Verfahren nach Anspruch 1, **dadurch gekennzeichnet, dass** es einen Schritt (19) des Exponierens des aktiven Films (24) einer kontrollierten Atmosphäre, die mit einer oder mehreren chemischen Substanzen angereichert ist, um die elektrische Reaktion bezüglich einer bekannten Substanzkonzentration zu charakterisieren, aufweist.

22. Sensorvorrichtung zum Überwachen der Anwesenheit chemischer Substanzen, des Typs, der ein Trägersubstrat (26) und als Nachweiselement einen aktiven Film (24) aus metallischen Nanopartikeln, die auf dem Trägersubtrat (26) angeordnet und zur Wechselwirkung mit den chemischen Substanzen in der Lage sind, um eine Leitfähigkeitsveränderung des Films (24) nachzuweisen, aufweist, wobei der aktive Film (24) eine gedruckte Tinte aus Nanopartikeln aufweist, **dadurch gekennzeichnet, dass** der Sensor Elektroden (40, 41) aufweist, die in Verbindung mit dem aktiven Film (24) angebracht sind und eine gedruckte und gesinterte Tinte aus Nanopartikeln aufweisen.

23. Sensorvorrichtung nach Anspruch 22, **dadurch gekennzeichnet, dass** die gedruckte Tinte Gold-Nanopartikel mit mittleren Abmessungen in einem Bereich von 1,5 bis 20 nm aufweist.

24. Sensorvorrichtung nach Anspruch 22, **dadurch gekennzeichnet, dass** die gedruckte Tinte Gold-Nanopartikel aufweist, die einen Goldkern und eine Schutzhülle, die ein Passivierungsmittel aufweist, aufweisen.

25. Vorrichtung nach Anspruch 22, **dadurch gekennzeichnet, dass** die Elektroden (40, 41) ineinandergreifend sind.

26. Sensorvorrichtung nach Anspruch 22, **dadurch gekennzeichnet, dass** die Elektroden (40, 41) und der aktive Film (24) dieselbe gedruckte Tinte aus Nanopartikeln aufweisen.

## Revendications

1. Procédé de réalisation d'un capteur (20) apte à détecter la présence de substances chimiques et comprenant, en tant qu'élément de détection, un film actif (24) de nanoparticules métalliques capable d'interagir avec les substances chimiques pour déterminer une variation de la conductivité électrique globale du film (24), le procédé comprenant les étapes suivantes :
- préparer une encre comprenant une solution de nanoparticules métalliques, et
- imprimer par jet d'encre l'encre obtenue sur un substrat support (26) de façon à former le film actif (24), **caractérisé en ce que** cela comprend l'étape consistant à imprimer par jet d'encre des électrodes métalliques (40, 41) qui sont placées en contact avec le film actif (24) et qui sont connectées à un dispositif de test (42) pour permettre la détection d'une variation de la conductivité électrique.

2. Procédé selon la revendication 1, **caractérisé en ce que** la préparation de l'encre (12) comprend une étape de synthèse (15) de noyaux métalliques, une étape de passivation (16) des noyaux métalliques synthétisés et une étape de dissolution dans un solvant des nanoparticules avec obtention de l'encre.

3. Procédé selon la revendication 1, **caractérisé en ce que** l'impression par jet d'encre (30) est réalisée par éjection de gouttes d'encre élémentaires (32), "Impression de Gouttes à la Demande", par l'intermédiaire d'une tête d'impression (34) munie de buses (36).

4. Procédé selon la revendication 3, **caractérisé en ce que** l'éjection des gouttes élémentaires est réalisée par des moyens d'interaction de l'encre avec un élément piézo-électrique (38) connecté à la tête (34).

5. Procédé selon la revendication 3, **caractérisé en ce que** l'éjection des gouttes élémentaires est réalisée par des moyens d'interaction de l'encre avec un élément chauffant connecté à la tête (34).

6. Procédé selon la revendication 1, **caractérisé en ce que** les électrodes (40, 41) sont réalisées avec la même encre que celle obtenue pour la réalisation du film actif (24).

7. Procédé selon la revendication 1, **caractérisé en ce que**, pendant l'étape d'impression par jet d'encre, le substrat (26) est chauffé à une température déterminée pour provoquer l'évaporation du passivateur et le frittage de noyaux métalliques constituant les nanoparticules élémentaires.

8. Procédé selon la revendication 7, **caractérisé en ce que** le substrat (26) est maintenu à une température comprise entre 80 et 300°C.

9. Procédé selon la revendication 1, **caractérisé en ce qu'**il comprend une étape de préparation préliminaire d'un motif pour réaliser des électrodes en utilisant un logiciel CAD.

10. Procédé selon la revendication 9, **caractérisé en ce qu'**il comprend une étape d'interdigitation des électrodes (40, 41) .

11. Procédé selon la revendication 2, **caractérisé en ce que** l'étape de synthèse (15) comprend une réaction d'oxydoréduction entre un précurseur métallique et un agent réducteur polyolique.

12. Procédé selon la revendication 11, **caractérisé en ce que** la réaction d'oxydoréduction est réalisée en présence d'un agent d'encapsulation, pour contrôler la morphologie et les dimensions des nanoparticules métalliques.

13. Procédé selon la revendication 12, **caractérisé en ce que** l'agent d'encapsulation est du polyvinylpyrrolidone.

14. Procédé selon la revendication 11, **caractérisé en ce que** la synthèse est réalisée par des moyens de réduction de chlorure de Au(III) tri-hydraté (HAuCl₄H₂O) avec de l'éthylène glycol (EG) en présence de polyvinylpyrrolidone (PVP).

15. Procédé selon la revendication 11, **caractérisé en ce que** les noyaux métalliques sont passivés au moyen d'un thiol (R-SH) ou d'un amine.

16. Procédé selon la revendication 11, **caractérisé en ce que** pour l'obtention de l'encre les nanoparticules sont dissoutes dans un solvant organique, tel que du toluène, du chloroforme, de l'hexane ou un homologue supérieur, et similaire.

17. Procédé selon la revendication 1, **caractérisé en ce que** l'encre comprend une solution colloïdale de nanoparticules d'or dans du toluène.

18. Procédé selon la revendication 11, **caractérisé en ce que** la synthèse des nanoparticules comprend une réaction d'oxydoréduction d'un précurseur métallique dans un système à deux phases, et **en ce que** l'étape de passivation est réalisée dans le même environnement que la réaction d'oxydoréduction.

19. Procédé selon la revendication 18, **caractérisé en ce que** le HAuCl₄ est réduit dans une émulsion de H₂O, de toluène et d'un agent de passivation en présence de bromure de tétra-octilammonium (N(Oct)₄Br) en tant qu'agent de transfert de phase et de borohydrure de sodium aqueux (NaBH₄) en tant qu'agent réducteur.

20. Procédé selon la revendication 3, **caractérisé en ce qu'**il comprend une étape de traitement préliminaire de la surface du substrat support et des électrodes, au moyen d'une fonctionnalisation à l'aide d'agents de couplage.

21. Procédé selon la revendication 1, **caractérisé en ce qu'**il comprend une étape d'exposition (19) du film actif (24) à une atmosphère contrôlée enrichie avec une ou plusieurs substances chimiques pour caractériser la réponse électrique en ce qui concerne une concentration en substance connue.

22. Capteur pour surveiller la présence de substances chimiques, du type comprenant un substrat support (26) et, en tant qu'élément de détection, un film actif (24) de nanoparticules métalliques, agencé sur le substrat support (26) et apte à interagir avec les substances chimiques pour déterminer une variation de conductivité du film (24), le film actif (24) comprenant une encre de nanoparticules imprimée, **caractérisé en ce que** le capteur comprend des électrodes (40, 41) placées en communication avec le film actif (24) et comprenant une encre de nanoparticules imprimée et frittée.

23. Capteur selon la revendication 22, **caractérisé en ce que** l'encre imprimée comprend des particules d'or ayant des dimensions moyennes comprises entre 1,5 et 20 nm.

24. Capteur selon la revendication 22, **caractérisé en ce que** l'encre imprimée comprend des particules d'or comprenant un noyau d'or et une coque de protection comprenant un agent de passivation.

25. Dispositif selon la revendication 22, **caractérisé en ce que** les électrodes (40, 41) sont interdigitées.

26. Capteur selon la revendication 22, **caractérisé en ce que** les électrodes (40, 41) et le film actif (24) comprennent la même encre de nanoparticules imprimée.
